# EUROPEAN PATENT APPLICATION

(11) **EP 1 115 055 A2**
(43) Date of publication of application: **11.07.2001**
(21) Application number: 00660241.1
(22) Date of filing: 21.12.2000
(51) Int. Cl.: G06F 3/023, G06F 3/033

(54) **System and method for using data processors controlled by one or more control devices**

(30) Priority: 30.12.1999 FI 992836
(71) Applicant: NOKIA MOBILE PHONES LTD., 02150 Espoo (FI)
(72) Inventor: Mäenpää, Jari, 85586 Poing (DE); Vähä-Sipilä, Antti, 33100 Tampere (FI)
(74) Representative: Pursiainen, Timo Pekka

(57) **Abstract**

The invention relates to a system and a method for using at least two data processors (1a, 1b, 1c), which data processors (1a, 1b, 1c) are arranged to be controlled preferably by means of at least one control device (2, 4). At least one set of local communication means (4) is coupled to each data processor (1a, 1b, 1c), and at least one set of local communication means (4) is coupled to each control device (2, 3), which local communication means (4), coupled to the control devices 82, 3) and the data processors (1a, 1b, 1c), communicate with each other in a wireless manner, wherein at least one control device (2, 3) is arranged to control at least two data processors (1a, 1b, 1c) in a wireless manner.

## Description

The present invention relates to a system as set forth in the preamble of the appended claim 1 as well as to a system as set forth in the preamble of claim 7. The invention also relates to a system as set forth in the preamble of the appended claim 11 and a method as set forth in the preamble of claim 17.

For storing various information, devices are available according to prior art, such as notepad computers, small hand-held computers, or PDA devices (Personal Digital Assistant). These devices can be used for storing *e.g.* calendar data, notes, address data, telephone numbers, or corresponding information entered by the user. The data are normally entered in these devices by means of a keypad, but in some devices it is possible to store text data also by writing it directly on a touch screen *e.g.* by means of a pen-like object, or stylus. The performance of these devices is continuously increasing, and they already comprise several properties known from PC devices (Personal Computer). For some devices, there are expansion cards complying with the PCMCIA (Personal Computer Memory Card International Application) standard available, to couple these devices *e.g.* to mobile phones. Thus, for example PDA devices can be used to transmit and receive for example facsimile messages, short messages (SMS, Short Message Service) and other text files in a wireless manner by utilizing radio waves. In this specification, a PDA device refers to devices of the above-described art.

In a way known *per se,* there are also devices available, in which the functions of a mobile station and a PDA device are combined. One such known device is Nokia Communicator 9110, which can be used to communicate with the Internet network, to perform mobile phone functions, such as receiving a phone call and selecting a telephone number, and to receive *e.g.* facsimile messages. The properties of mobile stations, such as mobile phones, are continuously increasing, and they normally comprise functions *e.g.* for storing the telephone numbers of persons and companies. In this specification, a mobile station refers to such a mobile station which comprises functions of the above-described PDA device or a corresponding device.

In an increasing number of offices, one person usually has two or more computers in his/her use. These computers normally take a lot of space, because each computer comprises a separate keyboard, mouse and display. In the solution of prior art, the keyboard, mouse and display can be shared by two or more computers by a separate switch. To this switch, cables from the keyboard, mouse and display ports of each computer are coupled in such a way that the cables coming from each computer constitute a separate group to be taken into use. Also, one keyboard, mouse and display unit are coupled to this switch, whereby one computer can be used at a time. From the switch, it is manually selected which computer is in use at a time.

When the switch is used for controlling several computers, several bulky cables must be installed between the computer and the switch. On the other hand, these cables take less space than a separate display, keyboard and mouse for each computer. The switch comprises hardly any processing capacity, wherein the switch cannot fully automatically change the computer to be used, but the user must normally change manually the computer to be used by selecting in the switch. Moreover, the switch is not capable of transferring any information between the computers.

The switchs are normally such that it is not possible to couple different computers to them at a time. For example, it is not possible to couple so-called PC computers and Apple Macintosh computers simultaneously to the switch, but there is a different switch for each system. Furthermore, in mobile stations, it is not possible to use the same keyboard and pointing device as in an ordinary computer, even though it would be considerably easier to use a mobile station with the keyboard and pointing device of a computer.

According to prior art, some of the cables of the switch can be replaced by wireless communication. At present, there are several wireless pointing devices and keyboards by different manufacturers. However, several cables must still be drawn from each computer to the switch. It is a problem with keyboards and pointing devices of prior art that they normally operate by means of an infrared link. Thus, for the link to function, there must be an optical contact, directly or via reflecting surfaces, between the keyboard or pointing device and the receiver. At present, however, there are also wireless devices which operate via a radio link and do not require a fully unobstructed space between the transmitter and the receiver.

In wireless communication, several different techniques have been used. Maybe the most versatile and modern technique of these is the Bluetooth™ which is becoming an open technology for the transmission of data and voice. It is based on inexpensive short-distance radio links which are implemented in integrated circuits having a size of approximately 9 × 9 mm. The operating radius is typically about ten metres, but by using a greater transmission output, it is possible to achieve a range of even 100 metres. The Bluetooth™ technology is aimed at wireless communication between very different devices. The maximum data transmission rate is about 1 Mb/s. These devices can be for example mobile phones, portable computers, various peripheral devices for computers, and/or fax machines. Some of the devices may be portable devices and some can be stationary. Between these devices, the Bluetooth™ can set up a wireless communication link at a frequency of about 2.4 GHz.

The Bluetooth™ is designed to operate *e.g.* in an environment which is susceptible to interference, wherein it uses quick acknowledgement and frequency jumping. A Bluetooth™ radio module avoids the interference of a signal to other signals by shifting to a new frequency after transmitting or receiving a packet. Compared with the frequency jumping of other systems operating on the same frequency band, the Bluetooth™ changes the frequency more often and transmits shorter packets. For this reason, a radio link implemented with the Bluetooth™ technology is more stable than in other systems.

Devices using the Bluetooth™ technology can set up both point-to-point and point-to-multi-point connections. The Bluetooth™ technology can be used to implement a so-called piconet which can comprise 2 to 8 devices. In such a network, all the devices apply the same frequency jumping pattern. To avoid interference between these devices, one device is made a master whose clock and frequency jumping is used to synchronize the other devices in the piconet. In the piconet, the devices are distinguished on the basis of a 3 bit long MAC address. Several piconets constitute a scatternet.

Various information, such as images and text, must be frequently transferred between computers. At present, the transfer is preferably performed in such a way that the user stores the desired information in a format intelligible to both computers *e.g.* on a diskette. After this, the user shifts over to use the other computer in which he/she opens the file stored on the diskette and attaches the data to a desired application.

Between computers using Windows NT® 4.0, it is possible to transfer information by means of a shared clipboard. At first, desired objects are selected and copied in the source computer, wherein the data to be copied is transferred to the clipboard of the source computer. Next, in the review of the clipboard, a desired page is shared. After this, it is possible to use the destination computer to copy the data on the shared clipboard page to an application. The content of the shared clipboard page is not updated automatically, but each item of information to be copied to the second computer must be separately transferred to the shared clipboard page. In practice, the shared clipboard page corresponds to any data file shared over a network. In this case, the desired data is stored as a filed in the form of a clipboard. In the destination computer, the data file, in the form of the shared clipboard, is opened and the desired data is copied to another application. Such a shared clipboard is not actually a clipboard shared by these computers. If there were a shared clipboard used by the computers, the data copied by the source computer should be attachable to the destination computer without any separate operations.

It is an aim of the present invention to provide a method and a system for using several computers with one wireless keyboard and one wireless mouse. According to the invention, this aim can be achieved by installing *e.g.* IR (InfraRed) or LPRF (Low Power RF) transceiver units in the computers and respective transceiver units in the keyboard and in the pointing device. Furthermore, the keyboard and the mouse are capable of distinguishing between the receiver units in different computers, wherein they can be used to control each computer when necessary. In addition, each computer is preferably equipped with a device driver or the like to use a remote control device.

It is another aim of the invention to provide a method and a system for establishing a shared clipboard. According to the invention, this aim can be achieved by providing the keyboard or the pointing device with so much processing and memory capacity that it can maintain a clipboard shared by two or more computers and transfer data on the clipboard from the clipboard to a computer. Furthermore, the system should comprise a protocol, by means of which it is possible to implement all the functions of the shared clipboard.

More precisely, the system according to the invention is characterized in what will be presented in the characterizing part of claim 1. The system according to another preferred embodiment of the invention is characterized in what will be presented in the characterizing part of claim 7. Furthermore, the method according to the invention is characterized in what will be presented in the characterizing part of claim 11. Also, the method according to another preferred embodiment of the invention is characterized in what will be presented in the characterizing part of claim 17.

With the present invention, considerable advantages to methods of prior art are achieved. By the method and system according to the invention, it is possible to eliminate a majority of cables and a separate switch between the computers. Furthermore, a shared clipboard can be implemented between the computers, which is available for use by these computers.

In the following, the invention will be described in more detail with reference to the appended drawings, in which
- Fig. 1: shows a system according to a preferred embodiment of the invention,

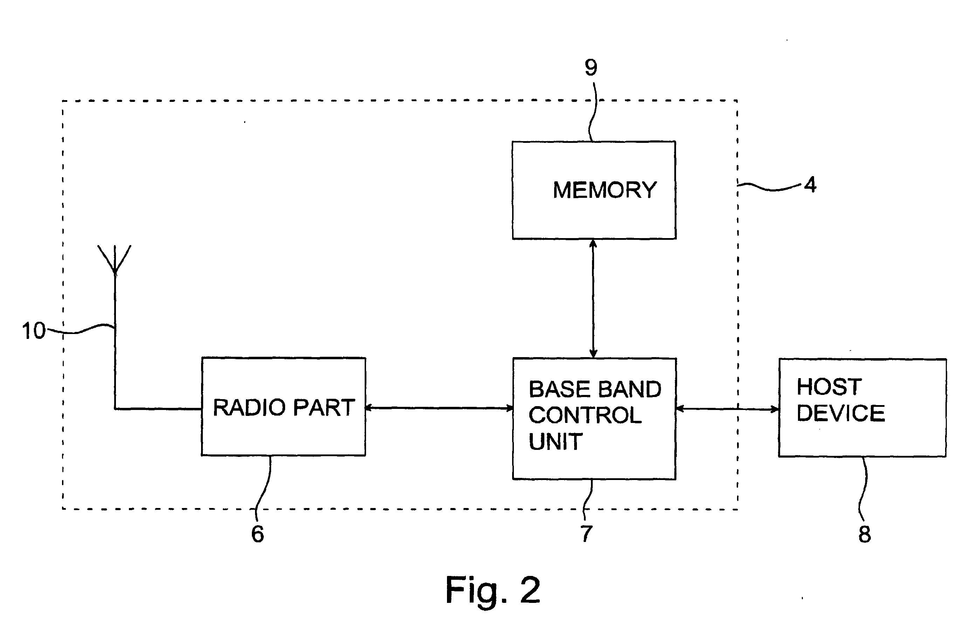

- Fig. 2: shows a transceiver based on low power radio frequency communication in a reduced block chart,

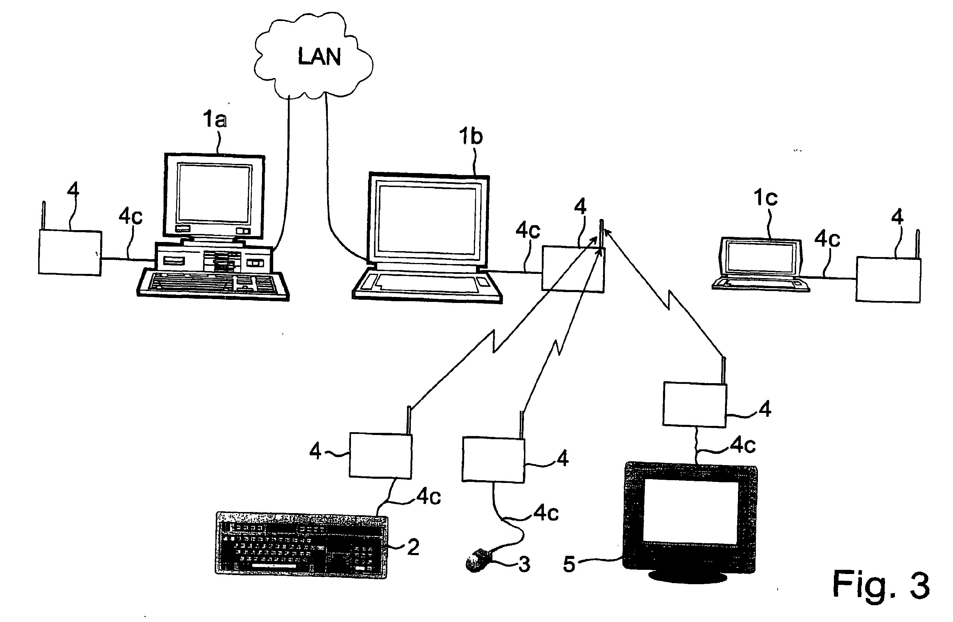

- Fig. 3: shows a system according to the invention, implemented with technology based on lower power radio communication, and
- Figs. 4a and 4b: show flow charts of the operation of a shared clipboard in different cases.

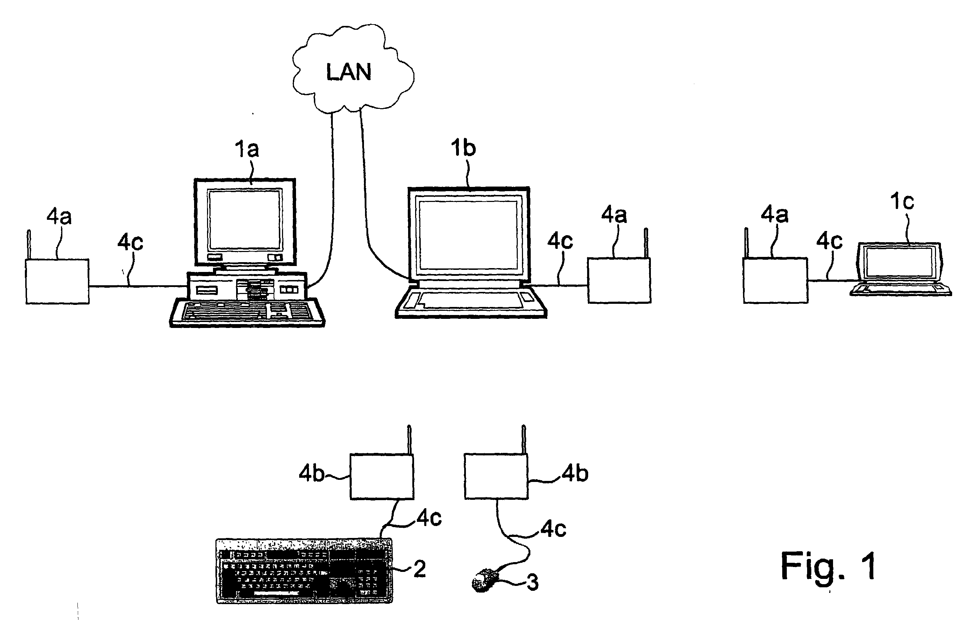

Figure 1 shows a system according to a preferred embodiment of the invention. The system comprises two or more data processors. These data processors can be for example work stations 1a, portable computers 1b or mobile stations 1c. Some of these data processors can be coupled to each other via a communication network, for example a local area network LAN. All the data processors are controlled with the same keyboard 2 and the same pointing device 3, *e.g.* a mouse. The keyboard 2 can also contain a pointing device 3, wherein a separate pointing device will not be needed. In addition to these shared control devices, for example portable computers 1 b and mobile stations 1 c can also have control devices of their own, but in connection with the system according to a preferred embodiment of the present invention, the shared control devices 2 and 3 are used for controlling these data processors. Because the control devices 2 and 3 communicate in a wireless manner with the data processor to be controlled, they are equipped with power sources of their own, for example batteries.

The keyboard 2 and the pointing device 3 can have either a shared transmitter unit 4b or they can each have a separate transmitter unit. In the system according to the invention, the same control device 2, 3 can be used to control several data processors 1a, 1b, 1c coupled to the system; therefore, the data processors 1a, 1b, 1c and the control devices 2, 3 coupled to the system are allocated identifications. Thus, in communication between the control devices 2, 3 and the data processors 1a, 1b, 1c, these identifications can be used to show *e.g.* from which device 1a, 1b, 1c, 2, 3 each message has been transmitted and for which device 1a, 1b, 1c, 2, 3 it is intended. Thus, preferably in the local communication means 4 of each device 1a, 1b, 1c, 2, 3 that received the message, the identification of the receiving device is examined and compared with the identification of the device 1a, 1b, 1c, 2, 3 in question. If the identifications match, the message is preferably processed in this device 1a, 1b, 1c, 2, 3 and the operations required in the message are performed, as will be described below in this specification.

The transmitters 4b and the receivers 4a communicate with each other in a wireless manner, for example via an infrared or radio link. The communication link between the control devices 2, 3 and the data processors, which complies with the invention and will be primarily referred to as a local link below in this specification, can be preferably implemented by applying so-called Bluetooth™ technology. It is obvious, however, that the invention is not limited solely to the Bluetooth™ technology or to radio links, but the invention can also be applied by using another wireless communication system. In the following, the invention will be described in more detail by using a radio link applying the Bluetooth™ technology as an example of a local link.

The local communication means 4 comprise *e.g.* a receiver 4a, a transmitter 4b, a radio part 6, a control unit 7, and an antenna 10. The local communication means 4 formed in the different devices can, as such, be substantially identical with each other, irrespective of the device in question. The communication link between the local communication means 4 and the device is preferably implemented in a wired manner by means of a connection bus 4c. This connection bus 4c can, in a way known *per se,* be either a serial or a parallel connection bus. The implementation of this connection bus 4c can vary in different devices, wherein also the local communication means 4 coupled to the different devices may vary with respect to this connection bus.

The local communication means 4 can be preferably integrated in each device, wherein it is easier to handle and move such a device, because no external connection cable will be needed between the local communication means 4 and the device. Nevertheless, the local communication means 4 can also be implemented as a separate device, as shown in Fig. 1. Thus, the connection bus 4c is implemented at least partly as an external connection cable.

The clipboard shared by the data processors 1a, 1b, 1c can be implemented in a variety of ways. One implementation alternative comprises means for storing one item of data, copied from the clipboard of the data processor 1a, 1b, 1c to the shared clipboard, in the device 2, 3, 4 maintaining the shared clipboard, from which the item copied onto the clipboard can be transferred to another data processor 1a, 1b, 1c. Thus, the shared clipboard is preferably formed, in the device 2, 3, 4 maintaining this clipboard, in a memory space allocated for this purpose in the memory means 9 of the device 2, 3, 4 maintaining the shared clipboard. In another implementation alternative, the device 2, 3, 4 maintaining the shared clipboard is equipped with means for transferring data, copied onto the clipboard, between the data processors 1a, 1b, 1c without transferring the data in the device 2, 3, 4 maintaining the shared clipboard. In this case, *e.g.* the clipboard of the data processor 1a, 1b, 1c can be used as the clipboard. For data transfer, it is possible to use *e.g.* a local area network LAN, to which the data processors 1a, 1b, 1c are coupled, or the data transfer is executed *e.g.* by means of the local communication means 4 of the data processors 1a, 1b, 1c.

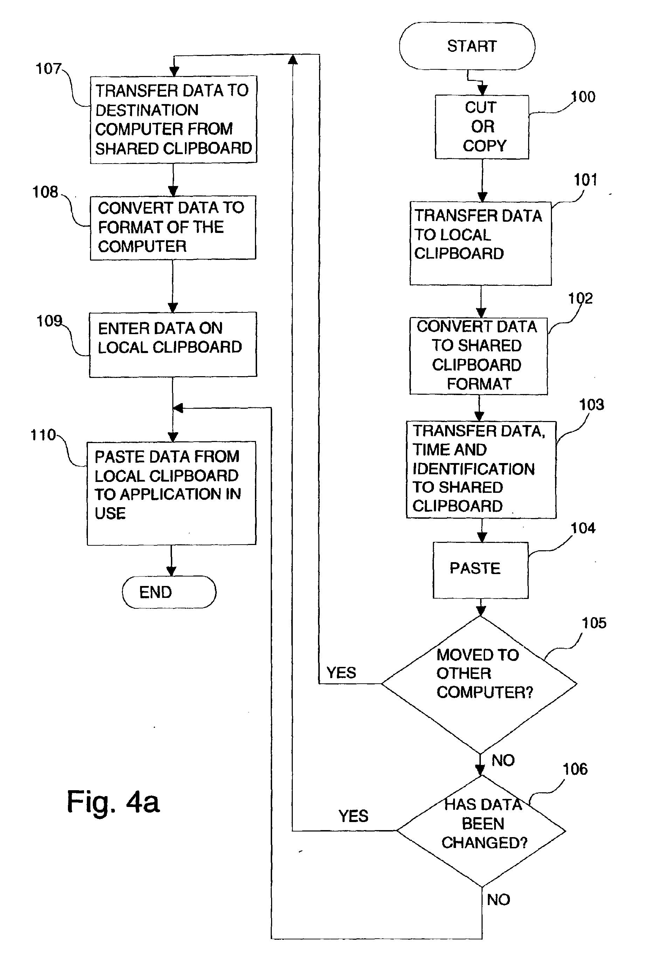

The first alternative for implementing a shared clipboard is that the device 2, 3, 4 maintaining the shared clipboard preferably comprises at least such a memory capacity that the whole content of the clipboard can be taken therein at a time. A flow chart on the operation of the system according to a preferred embodiment of this case is shown in Fig. 4a. In this case, when the user copies or cuts 100 some information, the data is transferred via a local clipboard 101 also to the memory 103 of the device 2, 3, 4 maintaining the shared clipboard. Furthermore, the time of adding and the identification of the data processor with which the cutting/copying was made are entered in the memory 9 of the shared clipboard.

If the user adds 104 the data with the same data processor 1a, 1b, 1c which he/she has used for cutting or copying 105 and the content of the shared clipboard has not changed 106, the adding is preferably executed directly from the local clipboard 110. On the other hand, if the user has switched over to use another data processor 1a, 1b, 1c or if the content of the shared clipboard has changed, the adding is executed from the shared clipboard in the memory 9 of the device 2, 3, 4 maintaining the shared clipboard. Information on whether the user has moved on to use another data processor 1a, 1b, 1c between the cutting/copying and adding 105 is preferably obtained by comparing the identification of the present data processor with the identification of the data processor on the shared clipboard. In order to be able to detect, upon adding, whether the data of the shared clipboard has changed 106, the time stamps of the local clipboard and the shared clipboard are compared. Adding from the shared clipboard is performed in such a way that when the user selects an add command 104, the data is retrieved to destination 107 from the clipboard in the memory of the device 2, 3, 4 maintaining the shared clipboard, and is added onto the local clipboard 109, from which the data is added to the application 110 in use.

Since data processors 1a, 1b, 1c can vary and/or they may have different operating systems, the data on the shared clipboard is preferably in a format which is intelligible to each data processor 1a, 1b, 1c. For this reason, the data to be transferred from the local clipboard to the shared clipboard must first be converted to this common format 102. When information is added from the shared clipboard to an application, the data on the shared clipboard is converted to a form 108 intelligible to the data processor 1a, 1b, 1c in use.

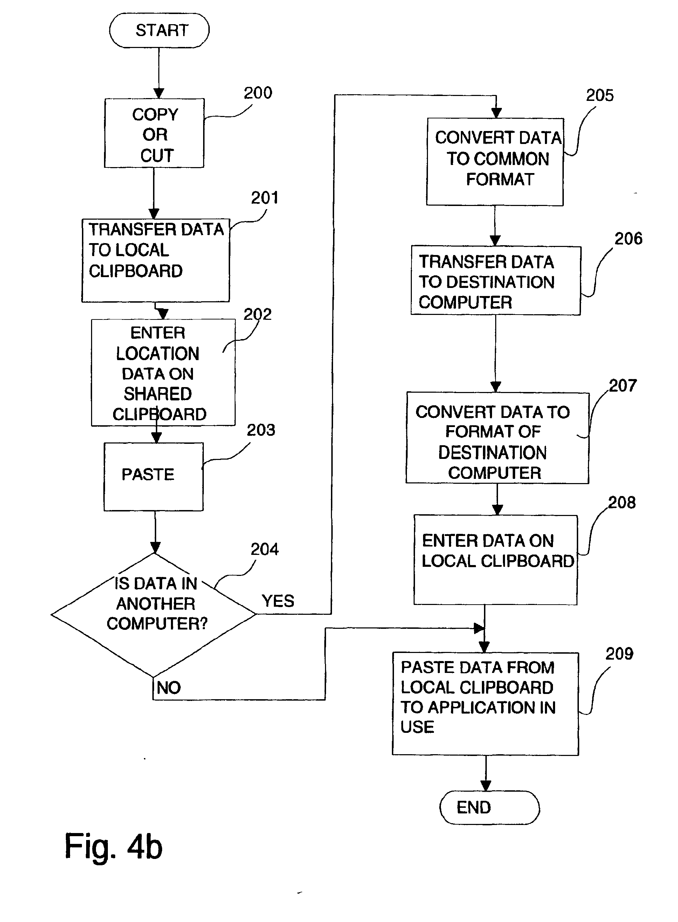

Another alternative to implement the shared clipboard is that in the device 2, 3, 4 maintaining the shared clipboard has at least such a processing and memory capacity that it is sufficient for storing the location of the data on the clipboard. This alternative requires significantly less memory capacity for maintaining the shared clipboard than the previous one, wherein it is possible to save in the memory costs. In this case, the data on the clipboard can be located *e.g.* on the local clipboard or in a data file of the data processor 1a, 1b, 1c, which was last used to perform copying or cutting. Alternatively, the cut/copied data can be stored in a data file shared by all the data processors 1a, 1b, 1c. A flow chart on the operation of the system according to a preferred embodiment of this case is shown in Fig. 4b. In this case, when the user copies or cuts 200 some information, the data is stored on a local clipboard 201 and possibly in a shared data file. In addition to this, the data on the location of the data and the identification of the data processor, by which the cutting/copying was performed, are transferred to the memory 202 of the keyboard or the pointing device.

If the user adds 203 the data with the same data processor 1a, 1b, 1c with which he/she did the cutting or copying 204, the addition is executed directly from the local clipboard 209. Information on whether the user has shifted over to use another data processor 1a, 1b, 1c between the cutting/copying and the adding 204 is preferably obtained by comparing the identification of the present data processor with the identification of the data processor on the shared clipboard. The adding is executed from the shared clipboard in such a way that when the user selects the add command 203, the data is retrieved into the data processor 1a, 1b, 1c by means of the location data 206 and is added via the local clipboard 208 to the application in use 209. The data can be transferred into the destination computer 1a, 1b, 1c for example via the device 2, 3, 4 maintaining the shared clipboard by using the Bluetooth™ technology or via a conventional local area network LAN.

Furthermore, since the data processors 1a, 1b, 1c can be different and/or they can have different operating systems, the data is preferably in a format intelligible to each data processor 1a, 1b, 1c upon adding from the shared clipboard. For this reason, the data to be added must be converted to a common format 205 before transferring the data from the local area clipboard. The data to be added after the transfer to the destination data processor 1a, 1b, 1c must be converted to a format 207 intelligible to the destination data processor 1a, 1b, 1c. It is first after this that the data can be added via the local clipboard to the desired application.

In each data processor 1a, 1b, 1c, there is a controller for implementing the distribution protocol of the remote input device, whose one aim is to distribute one keyboard 2 and one pointing device 3 between several data processors. It is another aim of the protocol to make a shared clipboard possible between these data processors 1a, 1b, 1c. The user interface properties required for controlling the system can be preferably implemented by means of a control program on the display of the data processor 1a, 1b, 1c or behind various key combinations. Thus, it is not necessary to implement a complex and expensive user interface *e.g.* in connection with the keyboard 2. It is also considerably easier to add new user interface properties. The distribution protocol of the remote input device must preferably be able to:
- take care of the communication between the control devices 2, 3 and the data processors 1a, 1b, 1c,
- identify new data processors 1a, 1b, 1c or control devices 2, 3,
- delete data processors 1a, 1b, 1c or control devices 2, 3 brought outside the range,
- change the data processor 1a, 1b, 1c to be controlled,
- group the control devices 2, 3 to cooperate,
- transfer data to and from the shared clipboard,
- convert the data from one format to another according to the need, and
- manage special situations.

In the system of the invention, there is no separate switch, from which the data processor 1a, 1b, 1c to be controlled could be selected, and therefore the change must be implemented in another way. The selection of the data processor 1a, 1b, 1c to be selected can be preferably implemented in the control program, wherein the change of the data processor 1a, 1b, 1c to be controlled can be implemented in a variety of ways. The data processor 1a, 1b, 1c to be controlled can be programmed to change for example when the user presses a certain key combination in the keyboard 2, selects another data processor 1a, 1b, 1c in a graphic user interface formed on the display, or moves the cursor of the pointing device 3 outside the display.

The system can also be implemented in such a way that the data processors 1a, 1b, 1c have a common display 5 in addition to the common keyboard 2 and the common pointing device 3. In addition to this common display, for example portable computers 1b and wireless stations 1c can still have their own displays, but the common display 5 introduced in this system is preferably used for controlling these data processors 1a, 1b, 1c.

The present invention is not limited solely to the embodiments presented above, but it can be modified within the scope of the appended claims.

## Claims

1. A system for using at least two data processors (1a, 1b, 1c) which data processors (1a, 1b, 1c) are arranged to be controlled preferably by means of at least one control device (2, 3), **characterized** in that at least one set of local communication means (4) is functionally coupled to each data processor (1a, 1b, 1c) and at least one set of local communication means (4) is functionally coupled to each control device (2, 3), which local communication means (4), functionally coupled to the control devices (2, 3) and the data processors (1a, 1b, 1c), communicate with each other in a wireless manner, wherein at least one control device (2, 3) is arranged to control at least two data processors (1a, 1b, 1c) wirelessly.

2. The system according to claim 1, **characterized** in that the control device (2, 3) is a keyboard (2) or a pointing device (3), such as a mouse.

3. The system according to claim 1 or 2, **characterized** in that at least one set of shared local communication means (4) is functionally coupled to the control means (2, 3).

4. The system according to claim 1 or 2, **characterized** in that at least one set of local communication means is functionally coupled to each control device (2, 3).

5. The system according to any of the claims 1 to 4, in which the communication is arranged to be executed at least partly by means of messages, **characterized** in that it comprises identification means (4) for identifying the transmitter (1a, 1b, 1c, 2, 3) and the receiver (1a, 1b, 1c, 2, 3) of the messages.

6. The system according to claim 5, **characterized** in that each data processor (1a, 1b, 1c) and control device (2, 3) is allocated an identification.

7. A system comprising one or more data processors (1a, 1b, 1c) and at least one control device (2, 3) for controlling said one or more data processors (1a, 1b, 1c), which control device (2, 3) comprises local communication means (4), **characterized** in that the system comprises a shared clipboard for storing data temporarily, which clipboard is arranged to be maintained preferably in one control device (2, 3) or local communication means (4).

8. The system according to claim 7, **characterized** in that it comprises means (2, 3) for defining data to be transferred from one data processor (1a, 1b, 1c) to the shared clipboard, means (4) for transferring the defined data to the shared clipboard, means (2, 3) for defining the destination of the data to be transferred, and means (4) for transferring the data from the shared clipboard to said destination, as well as at least one device (2, 3, 4) maintaining the shared clipboard, comprising at least memory means (9) in which the shared clipboard is maintained.

9. The system according to claim 7, **characterized** in that it comprises means (2, 3) for defining data to be transferred from one data processor (1a, 1b, 1c) to the shared clipboard, means (4) for defining location data for the defined data and for moving the shared clipboard, whose maintaining device (2, 3, 4) comprises at least memory means (9) for storing the location data, and that the system comprises means (4) for defining the data processor (1a, 1b, 1c) used as the destination for the data to be transferred, means (4) for transferring the location data from the shared clipboard to said data processor (1a, 1b, 1c) used as the destination, and means (4, LAN) for transferring the data to said data processor (1a, 1b, 1c) used as the destination on the basis of said location data.

10. The system according to claim 9, which comprises a local area network (LAN), **characterized** in that the data is arranged to be transferred to the data processor (1a, 1b, 1c) preferably by means of a local area network (LAN), to which the data processors (1a, 1b, 1c) are functionally coupled.

11. A method for using preferably at least two data processors (1 a, 1 b, 1c), which data processors (1a, 1b, 1c) are preferably controlled by at least one control device (2, 3), **characterized** in that at least one set of local communication means (4) is functionally coupled to each data processor (1a, 1b, 1c) and at least one set of local communication means (4) is functionally coupled to each control device (2, 3), which local communication means (4), to be functionally coupled to the control devices (2, 3) and the data processors (1a, 1b, 1c), communicate with each other in a wireless manner, wherein at least one control device (2, 3) is used to control at least two data processors (1a, 1b, 1c) in a wireless manner.

12. The method according to claim 11, **characterized** in that the control device (2, 3) used is a keyboard (2) or a pointing device (3), such as a mouse.

13. The method according to claim 11 or 12, **characterized** in that at least one set of shared local communication means (4) is functionally coupled to the control devices (2, 3).

14. The method according to claim 11 or 12, **characterized** in that at least one set of local communication means (4) is functionally coupled to each control device (2, 3).

15. The method according to any of the claims 11 to 14, in which system the data transmission is executed at least partly by means of messages, **characterized** in that the system is provided with identification means (4) for identifying the transmitter (1a, 1b, 1c, 2, 3) and the receiver (1a, 1b, 1c, 2, 3) of the messages.

16. The method according to claim 15, **characterized** in that each data processor (1a, 1b, 1c) and control device (2, 3) is allocated an identification.

17. A method in a system comprising one or more data processors (1a, 1b, 1c) and at least one control device (2, 3) for controlling said one or more data processors (1a, 1b, 1c), which control device (2, 3) comprises local communication means (4), **characterized** in that the system is provided with a common clipboard for storing data temporarily, which clipboard is preferably maintained in one control device (2, 3).

18. The method according to claim 17, **characterized** in that in the method, the data to be transferred from one data processor (1a, 1b, 1c) is defined, the defined data is transferred to a shared clipboard, a destination is defined for the data to be transferred, and the data is transferred from the shared clipboard to said destination.

19. The method according to claim 17, **characterized** in that in the method, the data to be transferred from one data processor (1a, 1b, 1c) is defined, the location data is defined for the data, the location data is transferred to the shared clipboard, a data processor (1a, 1b, 1c) to be used as the destination is defined for the data to be transferred, the location data is transferred from the shared clipboard to said data processor (1a, 1b, 1c) to be used as the destination, and the data is added to said data processor (1a, 1b, 1c) to be used as the destination on the basis of the location data.

20. The method according to claim 19, which system comprises a local area network (LAN), **characterized** in that the data is transferred to the data processor (1a, 1b, 1c) preferably by means of a local area network (LAN), to which the data processors (1a, 1b, 1c) are functionally coupled.
